# EUROPÄISCHE PATENTSCHRIFT

(11) **EP 2 368 038 B1**
(45) Veröffentlichungstag und Bekanntmachung des Hinweises auf die Patenterteilung: **04.07.2012**
(21) Anmeldenummer: 09799495.8
(22) Anmeldetag: 05.11.2009
(51) Int. Cl.: F03D 11/02, F16H 1/48

(54) **PLANETENGETRIEBE**
PLANETARY GEAR
TRANSMISSION A ENGRENAGES PLANETAIRES

(30) Priorität: 23.12.2008 DE 102008063044
(43) Veröffentlichungstag der Anmeldung: 28.09.2011
(73) Patentinhaber: Aerodyn Engineering GmbH, 24768 Rendsburg (DE)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2009/001566
(87) Internationale Veröffentlichungsnummer: WO 2010/072188

(56) Entgegenhaltungen:
- EP-A2- 1 544 504
- WO-A1-02/14690
- US-A1- 2006 052 200
- US-A1- 2008 153 657

## Beschreibung

Die Erfindung betrifft ein Planetengetriebe mit einem ortsfesten Hohlrad, einem drehbaren, wenigstens zwei Planetenräder aufweisenden Planetenträger und einem Sonnenrad.

Insbesondere betrifft die Erfindung ein Getriebe für eine Windenergieanlage.

Der bei Windenergieanlagen anhaltende Trend relativ kompakte und leichte Einheiten zu konstruieren führt dazu, dass die in der Windenergieanlagen eingebauten Komponenten zunehmend größeren Verformungen auch in lastübertragenden Teilen ausgesetzt werden. Insbesondere unter dynamischen Belastungen führen größere Verformungen vor allem bei Lagern und Getriebeteilen zu örtlich teilweise unzulässig starken lokalen Spannungsüberhöhungen, die wiederum eine deutlich Verminderung der Lebensdauer der Komponenten zur Folge haben. Bei Lagern und Getrieberädern können schon ein Versatz in der Verzahnung oder eine Laufbahnabweichung der Wälzkörper von 10 bis 25 µm durch Verkippungen aufgrund von äußeren Kräften und Momenten zu einer so großen Überlastung führen, das die Bauteile nach schon sehr kurzer Zeit versagen und damit zu erheblichen finanziellen Schäden führen.

Darüber hinaus erzeugt eine Windenergieanlage aufgrund des ungleichmäßigen Eingriffs der Getriebezahnräder ineinander einen erhöhten Geräuschpegel, der insbesondere in bewohnten Gebieten unerwünscht ist.

Speziell bei Windenergieanlagen der 2,5 bis 6 MW-Klasse weisen Rotorlager und Hohlräder von Planetengetrieben einen Außendurchmesser von ca. 2,5 bis 3,5 m und Breiten von ca. 350 bis 500 mm auf, wobei die große Zahnbreite zu Problemen des gleichmäßigen Eingriffes der Verzahnung über die gesamte Breite der Zähne führt, insbesondere wenn äußere Belastungen auf diese Bauteil einwirken. Daher ist es erforderlich, dass die Planetenräder der ihnen aufgezwungenen Verformung, vor allem der Verkippung um die Achsen senkrecht zur Rotationsachse der Planetenräder, ausweichen können, um die Zahneingriffe in allen Lastsituation möglichst optimal also gleichmäßig über die Zahnbreite stattfinden zu lassen.

Aufgrund der einseitigen Drehmomentübertragung durch die Planetenräder wird nämlich der Planetenträger tordiert. Dieses führt zu einer Verschiebung der Rotationsachsen der Planetenräder und damit zu einer Verungleichmäßigung der Zahneingriffsbelastung über der gesamten Zahnbreite, sodass die Zahnräder die Kräfte nicht mehr gleichmäßig verteilt übertragen können. Hieraus entstehen örtliche Überlastungen und Verschleiß der Verzahnung, denen bei den bekannten Planetengetrieben teilweise durch Zahnkorrekturen begegnet werden kann.

Zur weiteren Abhilfe ist beispielsweise aus der DE 103 18 945 B3 ein Planetengetriebe bekannt, bei dem die Planetenachsen fest mit der Getriebewandung verbunden und die Planetenräder auf den Planetenachsen taumelnd gelagert sind.

Für die Lagerung der Planetenräder können auch die aus der US 2008/0153657 A1 als "Flexpins" bekannten Elemente verwendet werden. Dieses Dokument wird als nächstliegender Stand der Technik berücksichtigt und offenbart die Merkmale des Oberbegriffes des Anspruchs 1.

Allerdings geht mit dieser Ausbildung eines Planetengetriebes trotz erhöhter Fertigungstoleranzen auch ein erhöhter Montageaufwand einher, weil jedes Planetenrad genau eingerichtet und auf seine Funktionsfähigkeit, d.h. seinen gleichmäßigen Eingriff mit dem Hohl- und mit dem Sonnenrad überprüft werden muss.

Aufgabe der Erfindung ist es daher ein Planetengetriebe zu schaffen, bei dem die Wahrscheinlichkeit eines ungleichmäßigen Eingriffs der Räder und der bei hohen Belastungen auftretende Geräuschpegel im Vergleich zu aus dem Stand der Technik bekannten Planetengetrieben herabgesetzt ist, wobei das Planetengetriebe auch einfacher herzustellen und zu montieren sein soll.

Erfindungsgemäß wird die Aufgabe durch das Planetengetriebe mit den Merkmalen von Anspruch 1 gelöst. Die Unteransprüche geben vorteilhafte Ausgestaltungen der Erfindung wieder.

Grundgedanke der Erfindung ist es, den Planetenträger mittig, in der Mitte zwischen den Tragscheiben mit dem Drehmoment des An- oder Abtriebselements zu beaufschlagen. Erfolgt die Kraftübertragung vom Rotor in das Getriebe mittig zwischen den Tragscheiben des Planetenträgers, wird eine Torsion des Planetenträgers verhindert. Dadurch führt die erfindungsgemäße Ausgestaltung des Planetengetriebes zu einem gleichmäßigen Tragbild an den Planetenrädern.

Die Erfindung wird anhand eines besonders bevorzugten Ausführungsbeispiels in Bezug auf Windenergieanlagen und unter Bezugnahme auf die beigefügten Zeichnungen näher erläutert. Es zeigen:
- Fig. 1: eine schematische Seitenansicht auf Gondel, Turm und Rotor einer Windenergieanlage;
- Fig. 2: eine geschnittene perspektivische Ansicht auf das Planetengetriebe nach der Erfindung;
- Fig. 3: eine Explosionsdarstellung des Planetengetriebes aus Fig. 2
- Fig. 4: eine Draufsicht auf das erfindungsgemäße Planetengetriebe nach einem besonders bevorzugten Ausführungsbeispiel;
- Fig. 5: eine perspektivische Ansicht des Planetenträgers;
- Fig. 6: einen Schnitt durch das Planetengetriebe aus Fig. 4 entlang der Linie E-E; und
- Fig. 7: einen Schnitt durch das Planetengetriebe aus Fig. 4 entlang der Linie F-F in einer leichten Abwandlung; und

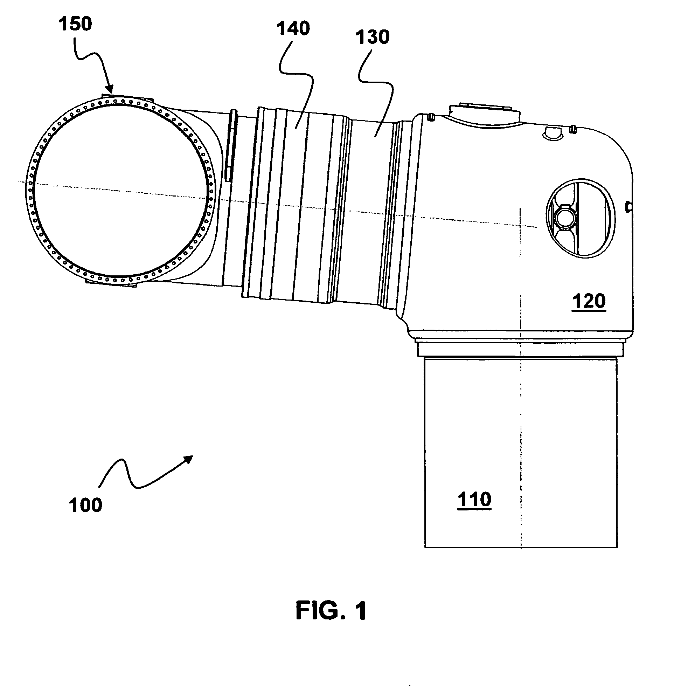

Fig. 1 zeigt eine perspektivische Ansicht einer besonders kompakten Bauform einer Windenergieanlage. Die Windenergieanlage 100 weist einen Turm 110, einen darauf angeordneten Kopfträger 120 und damit verbundenes Generatorgehäuse 130, Getriebegehäuse 140 und sich daran anschließende Nabe 150 auf. Kopfträger 120, Generatorgehäuse 130 und Getriebegehäuse 140 sind - wie aus der WO 2008/113318 A2 bekannt - bevorzugt als lastübertragende Bauteile ausgebildet.

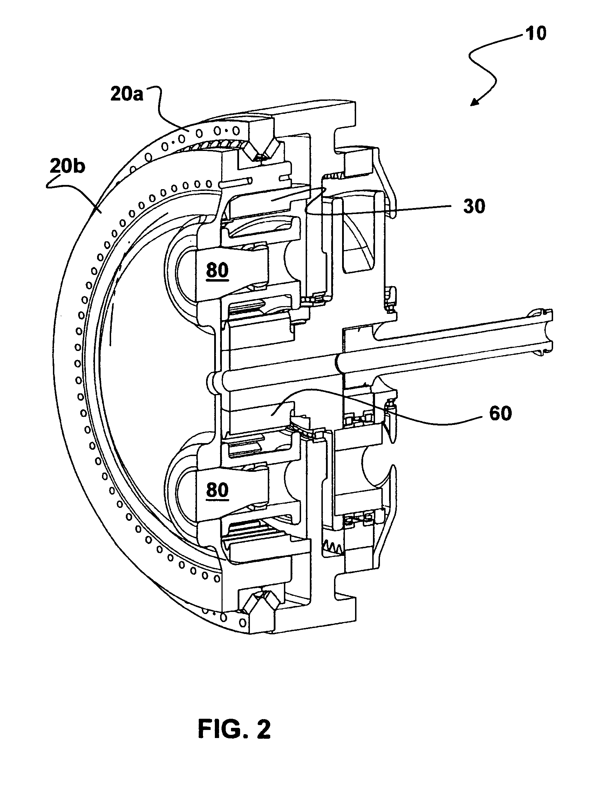

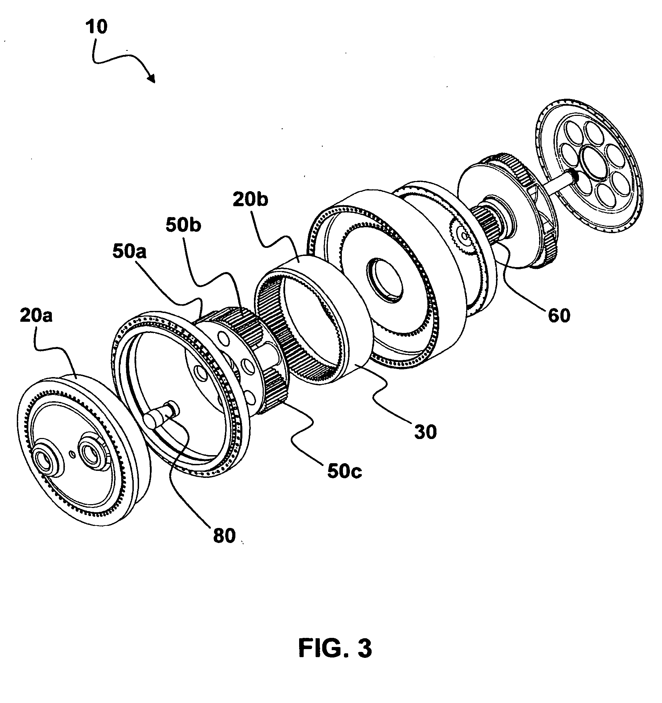

Fig. 2 zeigt ein vom Getriebegehäuse 140 der Windenergieanlage 100 aufgenommenes, bevorzugt ausgestaltetes Planetengetriebe nach der Erfindung in einer perspektivischen Ansicht, wobei Fig. 3 dasselbe Ausführungsbeispiel in einer Explosionsdarstellung zeigt. Das Planetengetriebe 10 weist ein Rotorlager 20 mit einem Außenring 20a und einem Innenring 20b auf. Die Nabe 150 der Windenergieanlage ist dabei mit dem Innenring 20b verbunden. Das Hohlrad 30 des Planetengetriebes ist ortsfest mit dem Getriebegehäuse verbunden. Am Planetenträger 40 sind mittels Bolzen vier Planetenräder 50a, 50b, 50c, 50d drehbar gelagert, die nach Außen jeweils mit dem ortsfesten Hohlrad 30 und nach Innen mit dem Sonnenrad 60 in Eingriff sind.

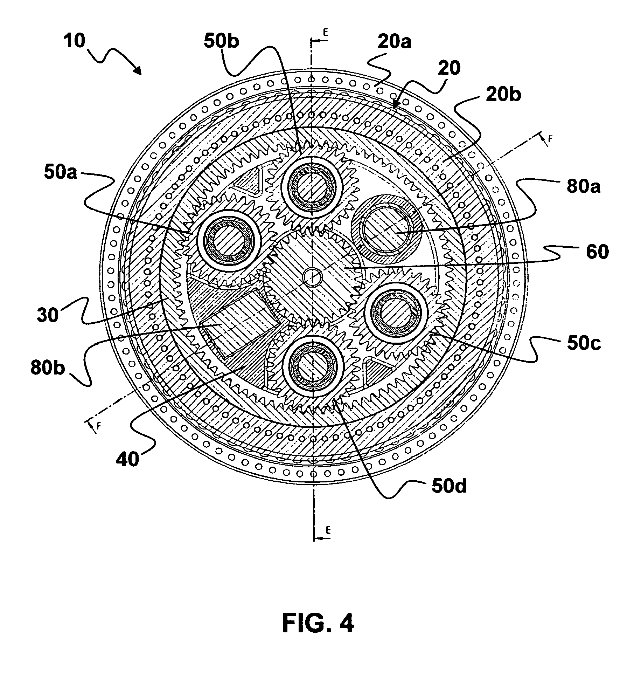

Weiterhin ist die Lagerung 80a, 80b, die im Einzelnen im Querschnitt von Fig. 4 dargestellt ist, zu erkennen, die im gezeigten Beispiel sowohl als Elastomerbuchse 80b mit rechteckigem Querschnitt als auch als sphärisches Gleitlager 80a ausgebildet ist, wobei diese beiden Elemente der Lagerung 80a, 80b auf den dem Sonnenrad 60 gegenüberliegenden Seiten des Planetenträgers 40 zwischen den Planetenrädern 50a und 50d bzw. den Planetenrädern 50b und 50 c auf einer Achse liegend angeordnet sind. Selbstverständlich können Gleitlager 80a und Elastomerbuchsen 80b auch alternativ zueinander verwendet werden.

Die sphärische Gleitlagerung 80a zeichnet sich aufgrund der großen Gleitfläche durch hohe radiale Steifigkeit und aufgrund der ungehinderten Drehfähigkeit durch geringe Rückstellmomente bei Verkippungen aus. Die Verwendung von Elastomerbuchsen 80b zeichnet sich durch eine geringfügige radiale Ausgleichsfähigkeit aus. Beide Lagerungselemente 80a, 80b ermöglichen das Verkippen des gesamten Planetenträgers quer zu ihrer Rotationsachse, wodurch sie sich auf Verformungen problemlos einstellen, ohne dass größere Bauteilbeanspruchungen in den Komponenten auftreten oder ungleichmäßiges Flankentragen der Zahneingriffe mit den beschriebenen Nachteilen stattfindet.

In Fig. 4 fällt weiter auf, dass die Planetenräder 50a, 50b, 50c, 50d zwar auf einem gedachten Kreis liegen, jedoch nicht gleichmäßig verteilt sind. Vielmehr ist zu erkennen, dass der Abstand zwischen den Planetenrädern 50a und 50b bzw. 50c und 50d geringer ist als der Abstand zwischen den Planetenrädern 50a und 50d bzw. den Planetenrädern 50b und 50c. Die Planetenräder 50a, 50b und 50c, 50d sind jedoch spiegelsymmetrisch zueinander angeordnet, wobei die Achse, auf der die Elemente der Lagerung 80a, 80b angeordnet sind, die gedachte Symmetrieachse ist.

Diese Ausbildung ist insbesondere dann vorteilhaft, wenn das Planetengetriebe für den Antriebstrang einer Windenergieanlage mit einem Zweiblattrotor verwendet wird. In diesem Fall ist der Innenring 20b direkt mit der Nabe des Zweiblattrotors verbunden und die Lagerungsanordnung 80a, 80b zur Achse der Rotorblätter senkrecht ausgerichtet, sodass die vom Rotor mittig eingeleiteten, auf die Bolzen der Planetenräder 50a, 50b, 50c, 50d wirkenden Kräfte möglichst geringen Einfluss auf die Verzahnung der Planeten 50a, 50b, 50c, 50d mit dem Hohlrad 30 bzw. Sonnenrad 60 haben und ein gleichmäßiger Zahneingriff gewährleistet bleibt.

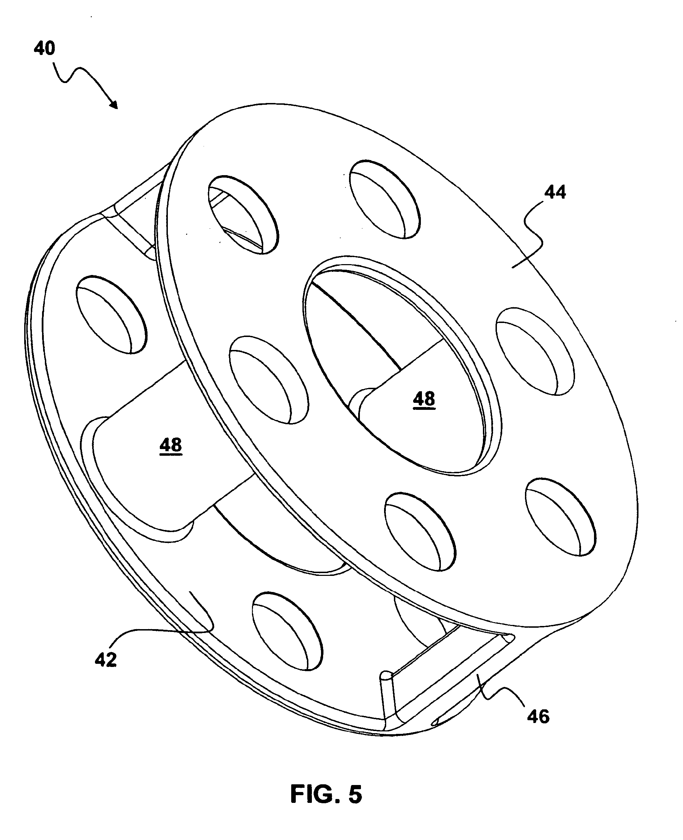

Fig. 5 zeigt den Planetenträger 40 des erfindungsgemäßen Planetengetriebes 10. Der Planetenträger weist eine hintere und eine vordere Tragscheibe 42, 44, die mittels Verbindungselementen 46, 48 miteinander verbunden sind. Erfindungswesentlich ist nun, dass im gezeigten Ausführungsbeispiel zwei Verbindungselemente 48 als Aufnahmen für die Bolzen 80 ausgebildet sind, die das Antriebs- oder Abtriebselement des Getriebes mit dem Planetenträger verbinden, wobei die Kräfteeinleitung in den Aufnahmen 48 mittig zwischen den Tragscheiben 42, 44 erfolgt.

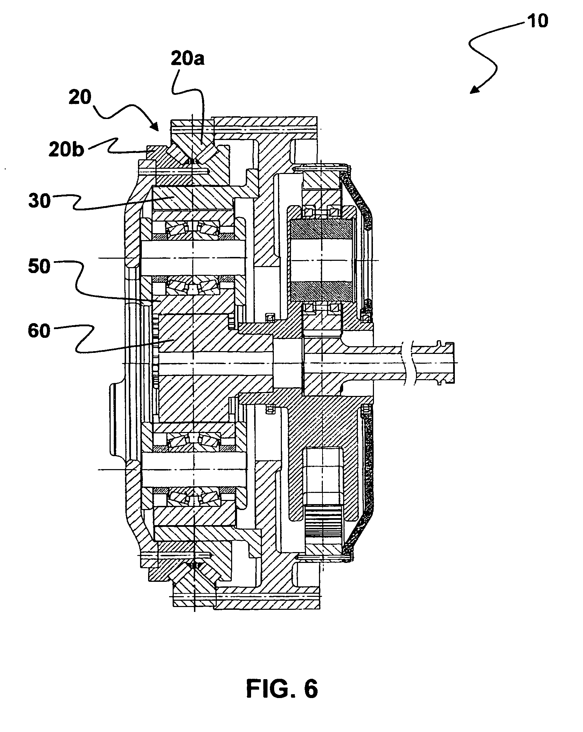

Fig. 6 zeigt die im Wesentlichen bekannten konstruktiven Verhältnisse des erfindungsgemäßen Planetengetriebes 10 aus Fig. 4 entlang der Linie E-E im Querschnitt. Deutlich ist das aus Außenring 20a und Innenring 20b bestehende Rotorlager 20 zu erkennen, wobei die Nabe 150 fest mit dem Innenring 20b des Rotorlagers 20 verbunden ist. Daran anschließend befinden sich die auf Planetenbolzen gelagerten Planetenräder 50 und das Sonnenrad 60.

Das hier dargestellte Planetengetriebe 10 ist als zweistufiges Planetengetriebe ausgestaltet. Es versteht sich jedoch für den Fachmann, dass neben einem zweistufigen Planetengetriebe auch einstufige oder mehrstufige Planetengetriebe gemäß der Erfindung ausgebildet werden können.

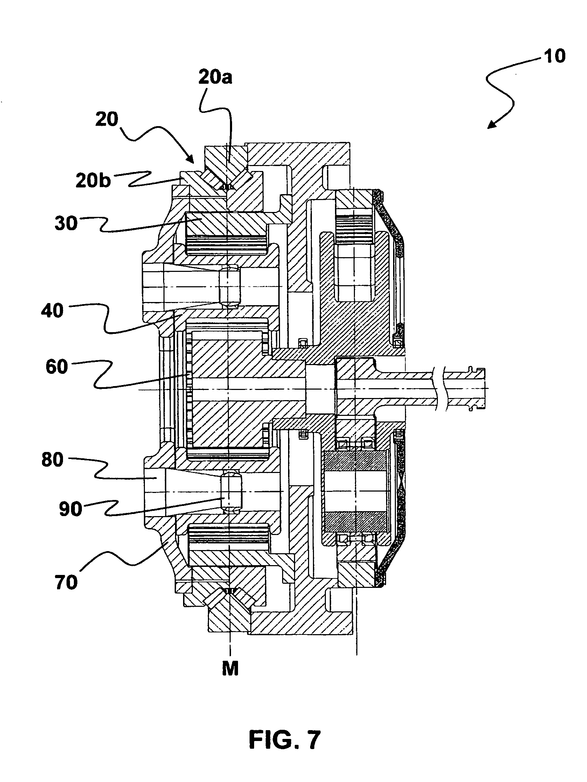

Insbesondere ist erfindungsgemäß vorgesehen, wie in Fig. 7 im Querschnitt dargestellt, das die Nabe 150 mit dem Innenring 20b und über das Verbindungselement 70 mit dem Planetenträger 40 verbunden ist. Dieses erfolgt beispielsweise über das in Fig. 4 dargestellte sphärische Gleitlager 80a oder die Elastomerbuchse 80b (abweichend hiervon sind in Fig. 2 zwei sphärische Gleitlager 80 eingezeichnet).

Deutlich ist dabei zu erkennen, dass die Nabe 150 als Antriebselement des Generators 10 über das Verbindungselement 70 und die Bolzen 80 in der Mittelebene M des Planetenträger 40 mit diesem verbunden ist, um das Drehmoment möglichst gleichverteilt in den Planetenträger 40 einleiten zu können. Insbesondere kann Fig. 7 entnommen werden, dass speziell die Gelenkköpfe 90 der Bolzen 80, die das Verbindungselement 70 direkt mit dem Planetenträger 40 und damit mittelbar die Nabe 150 mit dem Planetenträger 40 verbinden, in der Mittelebene M, also mittig zwischen den Tragscheiben 42, 44 des Planetenträgers 40, angeordnet sind.

Es versteht sich, dass der Planetenträger 40 mit einem Antriebselement, im gezeigten Beispiel der Nabe 150 eine Windenergieanlage 100, verbunden sein kann. In anderen Fällen kann das erfindungsgemäße Planetengetriebe 10 auch so ausgebildet und funktionell eingebunden sein, dass ein Abtriebselement mit dem Planetenträger verbunden ist.

Es versteht sich weiterhin, dass das Antriebs- oder Abtriebselement unmittelbar, d.h. direkt, oder mittelbar über weitere Strukturen, z.B. das Verbindungselement 70, mit dem Planetenträger verbunden sein kann. Wesentlich ist dabei nur, dass die Kraftübertragung zwischen Antriebselement und Planetenträger bzw. Planetenträger und Abtriebselement mittig in der Mittelebene des Planetenträgers erfolgt.

## Patentansprüche

1. Planetengetriebe (10) mit einem ortsfesten Hohlrad (30), einem drehbaren Planetenträger (40), der eine geradzahlige Anzahl von wenigstens vier spiegelsymmetrisch angeordneten Planetenrädern (50a, 50b, 50c, 50d) aufweist, und einem Sonnenrad (60),
**dadurch gekennzeichnet, dass**
das Planetengetriebe (10) zwei sich dem Sonnenrad (60) gegenüberliegende, zwischen den Planetenrädern (50a, 50b, 50c, 50d) angeordnete Lager (80a, 80b) aufweist, die das An- oder Abtriebselement des Planetengetriebes (10) in der Mittelebene (M) des Planetenträgers (40) mit dem Planetenträger (40) verbinden,
die Lager (80a, 80b) die gedachte Symmetrieachse bilden, und
wenigstens zwei Planetenräder (50a, 50b) einen geringeren Abstand zueinander aufweisen als eines dieser Planetenräder (50a, 50b) zu einem weiteren Planetenrad (50c, 50d).

2. Planetengetriebe (10) nach Anspruch 1, **dadurch gekennzeichnet, dass** die Verbindung von An- oder Abtriebselement mit dem Planetenträger (40) als Taumellagerung ausgeführt ist.

3. Planetengetriebe (10) nach einem der vorhergehenden Ansprüche, **dadurch gekennzeichnet, dass** das An- oder Abtriebselement mittels Bolzen mit dem Planetenträger (40) verbunden ist.

4. Planetengetriebe (10) nach Anspruch 3, **dadurch gekennzeichnet, dass** die Verbindung zwischen Bolzen und Planetenträger (40) als sphärisches Gleitlager (80a) ausgebildet ist.

5. Planetengetriebe (10) nach Anspruch 3, **dadurch gekennzeichnet, dass** die Verbindung zwischen Bolzen und Planetenträger (40) als Elastomerbuchse (80b) ausgebildet ist.

6. Windenergieanlage mit einem Zweiblattrotor und mit einem Planetengetriebe (10) nach einem der vorhergehenden Ansprüche, wobei die Nabe des Zweiblattrotors mit dem Planetenträger (40) verbunden ist und die von den Lagern (80a, 80b) gebildete Symmetrieachse zur Achse der Rotorblätter senkrecht ausgerichtet ist.

## Claims

1. A planetary gear (10) with a stationary ring gear (30), a rotatably planet carrier (40) that exhibits an even number of at least four mirror-symmetrically arranged planet wheels (50a, 50b, 50c, 50d), and a sun gear (60),
**characterized in that**
the planetary gear (10) comprises two bearings (80a, 80b) disposed opposite of the sun gear (60) and arranged between the planet wheels (50a, 50b, 50c, 50d), said bearings correcting the input or output element of the planetary gear (10) to the planet carrier (40) in the center plane (M) of the planet carrier (40),
the bearings (80a, 80b) form the imaginary axis of symmetry, and
at least two planet wheels (50a, 50b) have a lesser distance to each other than one of said planet wheels (50a, 50b) does to a further planet wheel (50c, 50d).

2. The planetary gear (10) according to Claim 1, **characterized in that** the connection of input or output element with the planet carrier (40) is designed as a tumble bearing.

3. The planetary gear (10) according to one of the preceding claims, **characterized in that** the input or output element is connected to the planet carrier (40) by means of screws.

4. The planetary gear (10) according to Claim 3, **characterized in that** the connection between screw and planet carrier (40) is designed as a spherical plain bearing (80a).

5. The planetary gear (10) according to Claim 3, **characterized in that** the connection between screw and planet carrier (40) is designed as an elastomeric bushing (80b).

6. A wind power plant having a double-bladed rotor and having a planetary gear (10) according to one of the preceding claims, the hub of the double-bladed rotor being connected to the planet carrier (40) and the axis of symmetry formed by the bearings (80a, 80b) is oriented at right angles to the axis of the rotor blades.

## Revendications

1. Engrenage planétaire (10) avec un pignon intérieur stationnaire (30), une cage d'engrenage planétaire orientable (40), qui présente un nombre pair d'au moins quatre roues planétaires, disposées symétriquement (50a, 50b, 50c, 50d), et une couronne (60),
**caractérisé en ce que**
l'engrenage planétaire (10) présente deux paliers (80a, 80b), se situant face à la couronne (60) entre les roues planétaires (50a, 50b, 50c, 50d), qui relient l'élément d'entraînement ou de sortie de l'engrenage planétaire (10) dans le plan médian (M) de la cage d'engrenage planétaire (40) avec la cage d'engrenage planétaire (40),
les paliers (80a, 80b) forment l'axe de symétrie imaginé, et
au moins deux roues planétaires (50a, 50b) présentent une distance moindre entre eux que l'une de ces roues planétaires (50a, 50b) vers une autre roue planétaire (50c), 50d).

2. L'engrenage planétaire (10) d'après revendication 1, **caractérisé en ce que** la connexion de l'élément d'entraînement ou de sortie avec la cage d'engrenage planétaire (40) est conçue comme logement oscillant.

3. L'engrenage planétaire (10) d'après l'une des revendications précédentes, **caractérisé en ce que** l'élément d'entraînement ou de sortie est connecté au moyen de boulons avec la cage d'engrenage planétaire (40).

4. L'engrenage planétaire (10) d'après revendication 3, **caractérisé en ce que** la connexion entre boulons et cage d'engrenage planétaire (40) est conçue comme appui glissant sphérique (80a).

5. L'engrenage planétaire (10) d'après revendication 3, **caractérisé en ce que** la connexion entre boulons et cage d'engrenage planétaire (40) est conçue comme douille élastomère (80b).

6. Centrale à énergie éolienne avec un rotor bipale et avec un engrenage planétaire (10) d'après l'une des revendications précédentes, dans laquelle le moyeu du rotor bipale est connecté avec la cage d'engrenage planétaire (40) et que l'axe de symétrie, formé par les paliers (80a, 80b), est orienté perpendiculairement par rapport à l'axe des pales de rotor.
